(19) **Europäisches Patentamt**

**European Patent Office**

**Office européen des brevets**

(11) **EP 1 248 087 B1**

(12) **EUROPÄISCHE PATENTSCHRIFT**

(45) Veröffentlichungstag und Bekanntmachung des Hinweises auf die Patenterteilung:
**31.05.2006 Patentblatt 2006/22**

(51) Int Cl.:
***G01J 3/46*** *(2006.01)*

(21) Anmeldenummer: **01107802.9**

(22) Anmeldetag: **05.04.2001**

(54) **Verfahren zur Erzeugung einer Farbpalette**

Method for generating a color palette

Procédé pour générer une palette de couleurs

(84) Benannte Vertragsstaaten:
**CH DE FR GB IT LI**

(43) Veröffentlichungstag der Anmeldung:
**09.10.2002 Patentblatt 2002/41**

(73) Patentinhaber: **Gretag-Macbeth AG**
**8105 Regensdorf (CH)**

(72) Erfinder:
• **Senn, Thomas**
**8157 Dielsdorf (CH)**
• **Van Aken, Harold**
**NY 12589 (US)**
• **Zimmermann, Bruno**
**8002 Zürich (CH)**
• **Ehbets, Peter**
**8046 Zürich (CH)**

(74) Vertreter: **Schwabe - Sandmair - Marx**
**Stuntzstrasse 16**
**81677 München (DE)**

(56) Entgegenhaltungen:
**EP-A- 0 527 108       EP-A- 0 913 674**
**US-A- 5 798 943**

**Beschreibung**

Die Erfindung betrifft ein Verfahren zur Erzeugung einer Farbpalette gemäss dem Oberbegriff des unabhängigen Anspruchs.

Grundlage des heutigen Design-Prozesses für Sonderfarben (z.B. für die Erstellung eines Firmen-Logo) bilden (körperliche) Farbsysteme in Form von Fächern, Tafeln, Atlanten, etc.. Der Designer sucht sich in einem dieser Farbsysteme eine Farbe aus und möchte diese anschliessend mit einem bestimmten Farbgebungs(Druck)prozess reproduziert haben. Seine implizite Forderung wird sein, dass die Reproduktion für möglichst viele Lichtquellen den gleichen Farbeindruck hervorruft wie bei der Betrachtung der ausgewählten Probe im Farbsystem. Dies bedeutet, dass die Reproduktion neben der Übereinstimmung unter der Beleuchtung, die bei der Betrachtung der Probe gewählt wurde, eine hohe Farbkonstanz aufweisen sollte. Es wird nicht (wie üblicherweise bei einem Farbrezeptursystem) nach der gleichen spektralen Kurve wie für die Probe gesucht, sondern nach einer spektralen Kurve, welche die Forderung der Farbkonstanz erfüllt.

Im weiteren ist es für einen Designer vorteilhaft, wenn er die Farbe aus einem Farbbuch auswählen kann, das in dem Prozess (Verfahren, Substrate) erstellt ist, der für die Reproduktion dieser Farbe Verwendung findet. Da die Erstellung eines Farbbuches mit erheblichem Aufwand verbunden ist, ist es heute nicht immer möglich, die Farbe aus einem entsprechenden Farbbuch auszuwählen. Speziell interessant ist es auch für den Designer schnell herauszufinden, ob eine bestimmte Farbe in mehreren Prozessen (z. Bsp. Offset auf gestrichenem Papier und gleichzeitig Offset auf Zeitungspapier) hergestellt werden kann. Mit den heute zur Verfügung stehenden Farbbüchern ist dies nicht einfach möglich.

Die europäische Patentanmeldung EP 0 527 108 A2 offenbart ein Verfahren zur Rezepturbestimmung einer Farbmittelmischung, welches ohne ein Farbbuch auskommt. In diesem Verfahren wird die nachzustellenden Sollfarbe durch die Farbartkoordinaten a* und b* nach CIE und einen Farbtiefen-Kennwert festgelegt. Von den zur Verfügung stehenden Standardfarben werden die Remissionsspektren verschiedenen tief gefärbter Farbmuster aufgenommen und abgespeichert. Aus den Remissionsspektren werden für die gewünschte Farbtiefe die Eich-Farborte der Standardfarben berechnet. Die betreffende Farbtiefe-Ebene wird in nicht überlappte Dreiecksflächen segmentiert, deren Eckpunkte durch die Eichfarborte gegeben sind. Es wird diejenige Dreiecksfläche aufgesucht, in der der Farbort der nachzustellenden Sollfarbe liegt. Anschliessend werden die relativen Mengenanteile der drei zur betreffenden Dreiecksfläche gehörenden Standardfarbe berechnet, welche zur Nachstellung der Sollfarbe erforderlich sind.

Des weiteren besteht eine wachsende Tendenz, Farben mit Hilfe von Computer-Programmen am Bildschirm zu gestalten. Solche Farben sind nur kolorimetrisch definiert, das heisst es liegt keine spektrale Kurve eines Farbmusters vor. Das Vorhandensein einer spektralen Kurve zu einer Farbe ist äusserst vorteilhaft. Nur mit Hilfe einer spektralen Kurve lassen sich zum Beispiel Metamerieeffekte im späteren Produktionsprozess abschätzen.

Die heute gebräuchlichen Farbsysteme unterstützen diesen Design-Prozess zu wenig und weisen gewichtige Nachteile auf. Sie lassen sich wie folgt einteilen bzw. charakterisieren: Systeme basierend auf Farbmischung (z.B. Pantone® , HKS, etc.):

Solche Systeme basieren auf einer gewissen Anzahl Basisfarben (z.B. 14 für Pantone), die in vordefinierten Konzentrationen miteinander vermischt werden, um eine möglichst gleichmässige und vollständige Abdeckung des Farbraumes zu erhalten.

Der Zusammenhang zwischen Konzentration und Farbwahrnehmung ist teilweise stark nichtlinear, sodass eine Abschätzung für die Konzentrationsstufen, welche die visuelle Gleichabständigkeit erfüllen, ein schwieriges Unterfangen darstellt. Die Bedingungen des Farbgebungs(Druck)prozesses (Substrat, Druckfarben, etc.) müssen sehr genau definiert werden, damit übereinstimmende Systeme hergestellt werden können. Da der Farbraum anhand von Konzentrationen definiert ist, wird ein Wechsel des Farbgebungsprozesses praktisch verunmöglicht. Die Farbkonstanz der Proben ist kein Kriterium bei der Herstellung von solchen Farbsystemen.

Systeme basierend auf Farbwahrnehmung (z.B. Munsell):

Das Munsell-System basiert auf den drei Farbwahrnehmungen Farbton, Helligkeit und Sättigung. Das Hauptprinzip für die Unterteilung des Farbraums ist die visuelle Gleichabständigkeit. Hierzu werden 10 visuell gleichabständige Basis-Farbtöne definiert, die wiederum in 10 gleichabständige Unter-Farbtöne aufgeteilt werden. Die Helligkeit ist ebenfalls in 10 visuell gleichabständige Stufen eingeteilt. Verschiedene Materialien können herangezogen werden, um einen solchen Farbraum zu realisieren (z.B. Anstrichfarben oder Plastik). Das Kriterium der Farbkonstanz kann bei der Herstellung von solchen Farbsystemen berücksichtigt werden.

Der Nachteil der beiden vorstehenden System-Typen besteht darin, dass keine mathematische Grundlage für die Definition des Farbraumes besteht. Ein weiterer wichtiger Nachteil besteht im Aufwand, der zur Erstellung solcher Farbatlanten notwendig ist.

Das CIE-System:

Das heute allgemein akzeptierte Farbsystem mit mathematischer Grundlage ist das CIE-System. Es beschreibt, wie aus einem Farbstimulus (z.B. Lichtquelle + Remission eines Materials) die drei Farbkoordinaten L,a,b berechnet werden können. Unter Berücksichtung von speziellen Farbabstandformeln ($\Delta$Ecmc, $\Delta$E94) ist

die Forderung der visuellen Gleichabständigkeit einigermassen erfüllt. Das CIE-System besitzt keine Zuordnung der Farbwerte zu einer spektralen Kurve.

Zusammenfassend kann gesagt werden, dass keines der heute gebräuchlichen Farbsysteme zugleich eine exakte mathematische Grundlage der Farbwerte und eine spektrale Kurve, die diesen Farbwerten gemäss dem Kriterium der Farbkonstanz zugeordnet ist, besitzt.

Durch die Erfindung soll nun ein Verfahren zur Erzeugung einer Farbpalette geschaffen werden, das diese Nachteile der bekannten Farbsysteme behebt.

Die Lösung dieser der Erfindung zugrundeliegenden Aufgaben ergibt sich durch das erfindungsgemässe Verfahren gemäss den kennzeichnenden Merkmalen des unabhängigen Anspruchs. Besonders zweckmässige und vorteilhafte Ausgestaltungen sind Gegenstand der abhängigen Ansprüche.

Die nach dem erfindungsgemässen Verfahren erstellte Farbpalette stellt eine Zuordnung dar von Farborten eines Farbraums mit mathematischer Grundlage zu Remissionskurven, die mit einem gegebenem Farbgebungsprozess (Farbmischung oder Rasterdruck), mit einer gegebenen Anzahl Basisfarben und einem gegebenem Substrat realisierbar sind. Als Basisfarben für die Farbmischung werden für den jeweiligen Farbgebungsprozess (z.B. Offset-, Flexo-, Tief- oder Siebdruck, aber auch Anstrichfarben und Plastik) typische Farbsortimente mit ca. 10 bis 15 Basisfarben verwendet. Beim Rasterdruck bilden die üblichen vier Skalenfarben Cyan, Magenta, Gelb und Schwarz die Grundlage. Die Substrate sind entweder saugend oder nicht-saugend und besitzen eine hohe, möglichst neutrale Remission (keine Eigenfarbe). Als Farbraum kommt typischerweise das CIE-Lab-System in Frage, da er sowohl die Forderung nach einer mathematischen Grundlage als auch die visuelle Gleichabständigkeit zu erfüllen vermag.

Der CIE-Lab-Farbraum wird zunächst in ein Gitter von Farbpunkten (Lab-Koordinaten) unterteilt. Im einfachsten Fall handelt es sich dabei um ein regelmässiges gleichabständiges Gitter (kartesische Koordinaten -> L, a,b). Zur Verbesserung der visuellen Gleichabständigkeit können auch radiale Gitter (Polarkoordinaten-> L,C, h) herangezogen werden (L = Helligkeit, lightness, C = Sättigung, chroma, h = Farbton, hue). Danach werden diese Gitterpunkte mit Hilfe eines an sich bekannten Farbrezeptur-Systems, beispielsweise etwa des von der Anmelderin vertriebenen Software-Programms "GretagMacbeth InkFormulation" rezeptiert. Die üblicherweise mehreren bis vielen möglichen Rezepte von Basisfarben, die sich hierbei ergeben, werden nach dem Kriterium der Farbkonstanz (minimal color inconstancy index) oder einem anderen geeigneten Kriterium, wie zum Beispiel dem Preis, sortiert, und die hinsichtlich dieses Kriteriums bestgeeignete Remissionskurve wird einem Gitterpunkt zugeordnet. Werden für die Rezeptierung mehr als drei Basisfarben in einem Rezept zugelassen, so entstehen zusätzliche Freiheitsgrade, die zur Optimierung der Remissionskurve bezüglich der Farbkonstanz herangezogen werden können.

Farbrezeptur-Systeme sind in vielen Varianten allgemein bekannt. Mit einem FarbrezepturSystem können anhand eines dreidimensionalen Eingabewertes (z.B. Lab-Farbkoordinaten) Mischungen/Uebereinanderdrucke von Basisfarben gefunden werden, deren Remissionskurven den vorgegebenen Punkt des CIE-Lab-Farbraumes ergeben. Die Berechnung der Farbkoordinaten des CIE-Systems anhand der Remissionskurven ist allgemein bekannt und in vielen Normen und Lehrbüchern beschrieben.

Folgende beispielsweisen Rezeptursysteme und zugehörigen mathematischen Modelle sind in der Literatur beschrieben und können zur Berechnung der Remissionskurven herangezogen werden, wobei zwischen Systemen basierend auf Farbmischung und Systemen basierend auf Rasterdruck zu unterscheiden ist:

- Kubelka-Munk-Modell (P. Kubelka und F. Munk: "Beitrag zur Optik der Farbanstriche" in Zeitschrift für technische Physik, 12. Jg., Nr. 11a, S. 593-601, 1931)
- Hoffmann-Schmelzer-Modell (K. Hoffmann: "Zusammenhang zwischen Extinktion und Remission nicht streuender Farbschichten auf weissem Untergrund" in 'Farbe und Lack' 7, S. 665-673, 1970 sowie H. Schmelzer: "Farbrezeptberechnung für Offset- und Buchdruckfarben" in 'Farbe und Lack' 4, S. 208, 1978)
- Mudgett-Richards-Modell (P.S. Mudgett und L.W. Richards: "Multiple Scattering Calculation for Technology" in 'Applied Optics' - Vol. 10, No. 7, Seite 1485, Juli 1971)
- Emmel-Hersch-Modell (P. Emmel und R.D. Hersch: "A Unified Model for Color Prediction of Halftoned Prints" in the 'Journal of Imaging Science and Technology', Vol.44, Nr.4, Juli/August 2000)
- Verschiedene klassische Modelle wie Clapper-Yule, Murray-Davis und Williams-Clapper können als Spezialfälle von der allgemeinen Theorie des Emmel-Hersch-Modells abgeleitet werden.

Die vorstehend erwähnte und für die vorliegende Erfindung vorzugsweise eingesetzte GretagMacbeth InkFormulation Software basiert auf dem Mudgett-Richards-Modell.

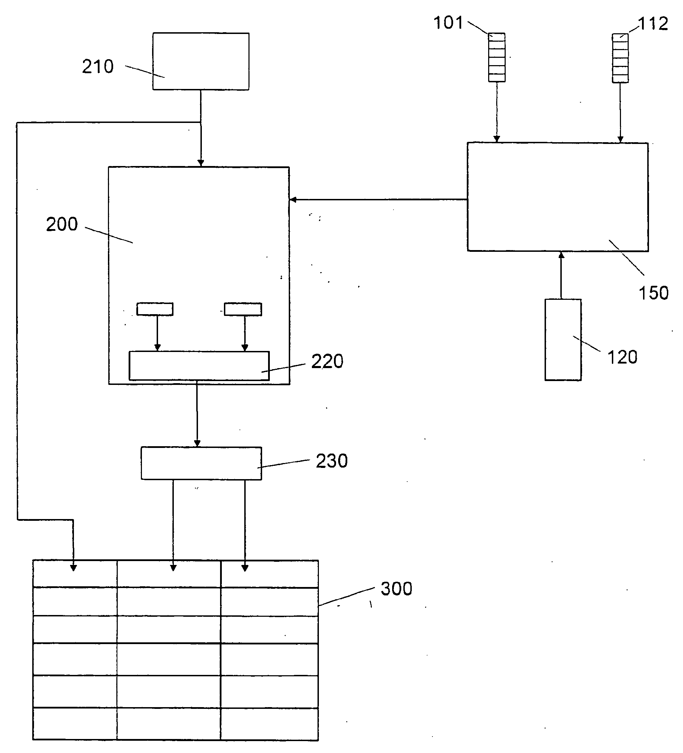

Im folgenden wird die Erfindung anhand der Zeichnung näher erläutert. Die einzige Zeichnungsfigur zeigt ein Prinzipschema des erfindungsgemässen Verfahrens.

Für das erfindungsgemässe Verfahren ist im Prinzip jeder mathematisch definierte Farbraum geeignet. Der Einfachheit halber wird im folgenden beispielsweise der allgemein gebräuchliche CIE-L,a,b-Farbraum zugrundegelegt und die Erfindung anhand dieses beispielsweisen Farbraums erläutert:

Bekanntlich ist für jeden Farbgebungsprozess (Druckprozess etc.) bei einem gegebenen Substrat jeweils nur ein bestimmter Teilraum des Farbraums erreichbar. Da die theoretisch möglichen Punkte im Lab-Farbraum nur schwierig zu bestimmen sind und die Oberfläche des Lab-Körpers eine relativ komplexe Gestalt aufweist, wird wie folgt vorgegangen:

Der Wertebereich für die L-Koordinate im CIE-Lab-Farbraum erstreckt sich von 0 bis 100. Typischerweise werden 10 bis 20 (z.B. gleichabständige) Werte für die L-Koordinate innerhalb dieses Wertebereichs ausgewählt und beim kleinsten dieser Werte (z.B. L=0) mit folgendem Algorithmus begonnen:

Zunächst werden mit Hilfe des Rezeptursystems Rezepte (spektrale Kurven) für die Koordinaten a=0 und b=0 berechnet. Hernach wird für die Punkte (a, b), die im Abstand d (typischerweise d = 5 oder 10) auf einem Quadrat mit den Eckpunkten (d,d), (-d,d), (-d,-d), (d, d) liegen, rezeptiert. Es handelt sich also um (d,0), (d,d), (0,d), (-d,d), (-d,0), (-d,-d), (0, d) und (d,-d). Anschliessend ist das Quadrat mit den Eckpunkten (2d,2d), (-2d,2d), (-2d,-2d), (2d,-2d) an der Reihe. Auch von diesem Quadrat werden alle Punkte im Abstand d rezeptiert. Sobald für ein Quadrat keine spektrale Kurve gefunden werden kann, die wenigstens einen der 4 Eckpunkte des Quadrat realisiert, wird die Rezeptur für das aktuelle L-Niveau abgebrochen und analog auf dem nächsten L-Niveau weitergeführt. In dieser Weise werden alle Punkte des Lab-Farbraumes gefunden, die mit einem bestimmten Druckprozess erreicht werden können, und es entsteht eine Tabelle von Farbkoordinaten mit ihren entsprechenden spektralen Kurven - die erfindungsgemäss erzeugte Farbpalette.

Das oben beschriebene Verfahren basiert auf kartesischen Koordinaten. Die Einteilung der a,b-Ebene kann auch basierend auf Polarkoordinaten vorgenommen werden. Die Rezeptur erfolgt dann statt auf Quadraten auf Kreisen konstanter Farbsättigung (chroma). Die Radien werden im einfachsten Fall als Vielfache eines Grundradius gewählt (r, 2r, 3r, ...), können aber zur Verbesserung der visuellen Gleichabständigkeit der Gitterpunkte auch in zu ΔE94 konformen Abständen gewählt werden. Die Unterteilung der a,b-Ebene für die Winkel (Farbton, hue) erfolgt am besten gleichmässig: w(i) - w(i-1) = Δw.

Für die rechnerische Synthetisierung der Spektren - die Rezepturberechnung - wird typischerweise das schon erwähnte Farbmisch-Programm "GretagMacbeth InkFormulation" verwendet. Die primäre Aufgabe eines Farbmisch-Programmes besteht darin, eine Vorlagefarbe mit einer bestimmten Anzahl Basisfarben (meist drei bis vier) möglichst frei von Metamerie zu reproduzieren. Dies wird erreicht, wenn die spektralen Kurven oder die farbmetrischen Werte (Farbkoordinaten) von Vorlage und Rezept zur Uebereinstimmung gebracht werden können.

Als Basisfarben für die Farbmischung werden für den jeweiligen Farbgebungsprozess (z.B. Offset-, Flexo-, Tief- oder Siebdruck, aber auch Anstrichfarben und Plastik) typische Farbsortimente mit ca. 10 bis 15 Basisfarben verwendet. Die zur Anwendung gelangenden Substrate sind entweder saugend oder nicht-saugend und besitzen eine hohe, möglichst neutrale Remission (keine Eigenfarbe).

Der eigentlichen Rezeptur muss eine Berechnung der optischen Daten (Absorptions- und Streuungsspektren) der Basisfarben vorangehen. Hierzu werden von den Basisfarben Eichfärbungen (z.B. Mischungen mit einem klaren Medium) auf einem bestimmten Substrat erstellt, diese Eichfärbungen spektrometrisch ausgemessen und die Messdaten nach an sich bekannten Methoden ausgewertet. Dazu kann beispielsweise wiederum das schon bekannte Programm "GretagMacbeth InkFormulation" herangezogen werden. Eine Spezialität des "GretagMacbeth InkFormulation" Programms ist es, die optischen Daten der Basisfarben vom Substrat unabhängig zu berechnen. Dies bedeutet, dass die gleichen optischen Daten der Basisfarben auch für beliebige andere Substrate verwendet werden können. Es genügt, dem Programm das Remissionsspektrum und den Saugfaktor des jeweiligen Substrates anzugeben.

Für die Erzeugung des erfindungsgemässen Farbpaletten-Systems wird das "GretagMacbeth InkFormulation" Programm auf Farbkoordinaten-Rezeptur umgeschaltet. Hierzu müssen Lichtquelle und Beobachter vorbestimmt werden. Typischerweise sind dies D65 für die Lichtquelle und 2° für den Beobachter. Nach der Auswahl von Farbsortiment (Farbgebungs-bzw. Druckprozess) und Substrat kann die Rezeptur gestartet werden.

Für die Rezeptur von Farbkoordinaten sind zwei Fälle zu unterscheiden:

Für eine Rezeptur aus einer Kombination von genau drei Basisfarben sind die Mischanteile (und damit auch die spektrale Kurve), welche die Ziel-Farbkoordinaten ergeben, exakt bestimmt. Da in der Regel viele Kombinationen aus drei Basisfarben die Ziel-Farbkoordinaten realisieren können, ist ein Kriterium zur Auswahl der besten Kombination (spektralen Kurve) nötig. Es wird gemäss einem wesentlichen Aspekt der Erfindung diejenige spektrale Kurve genommen, welche die beste Farbkonstanz aufweist. Näheres zur Farbkonstanz ist weiter unten erläutert.

Für eine Rezeptur anhand einer Kombination von mehr als drei Basisfarben sind die Mischanteile (und damit auch die spektrale Kurve), welche die Ziel-Farbkoordinaten ergeben, nicht eindeutig bestimmt. Neben den Farbkoordinaten kann eine weitere Grösse optimiert werden. Zum Beispiel kann gemäss einem wichtigen Aspekt der Erfindung die Forderung der maximalen Farbkonstanz in die Optimierung miteinbezogen werden. Am Schluss wird wieder diejenige spektrale Kurve genommen, welche die beste Farbkonstanz aufweist.

Farbkonstanz ist die Tendenz eines Farbmusters, das Aussehen seiner Farbe bei einem Wechsel von Farbe und/oder Pegel der Lichtquelle beizubehalten. In der Literatur - siehe z.B. Billmeyer und Saltzman: "Principles of color technology", 3. Auflage, John Wiley&Sons, New York, pp 128 ff - wird meist mit dem gegenteiligen Effekt, nämlich der Farbinkonstanz gearbeitet, und diese wird durch einen sog. Color Inconstancy Index CII quantitativ beschrieben. Eine einfache Art, einen Color Inconstancy Index für eine spektrale Kurve (z.B. Remission) festzulegen, ist es, aus der spektralen Kurve die Farbkoordinaten für eine Referenz- und eine Test-Lichtart zu berechnen und daraus den euklidschen Abstand (Farbabstand) zu bestimmen. Je grösser der euklidsche Farbabstand, desto geringer ist die Farbkonstanz, und umgekehrt.

Eine bessere Uebereinstimmung mit dem visuellen Empfinden lässt sich durch Verwendung der bekannten ΔE94-Formeln erzielen. Darin bedeuten ref eine Referenz-Lichtart, test eine Test-Lichtart und stehen L für Helligkeit (Lightness), C für Farbsättigung (Chroma) und H für Farbton (Hue):

$$CII = \sqrt{\left(\frac{\Delta L^{\bullet}}{2S_L}\right)^2 + \left(\frac{\Delta C^{\bullet}_{ab}}{2S_C}\right)^2 + \left(\frac{\Delta H^{\bullet}_{ab}}{S_H}\right)^2}$$

$$\Delta L^{\bullet} = L^{\bullet}(test) - L^{\bullet}(ref)$$

$$\Delta C^{\bullet}_{ab} = C^{\bullet}_{ab}(test) - C^{\bullet}_{ab}(ref)$$

$$\Delta H^{\bullet}_{ab} = H^{\bullet}_{ab}(test) - H^{\bullet}_{ab}(ref)$$

$$S_L = 1$$

$$S_C = 1 + 0.045 * C^{\bullet}_{ab}(ref)$$

$$S_H = 1 + 0.015 * C^{\bullet}_{ab}(ref)$$

Für eine noch exaktere Berechnung des Color Inconstancy Index muss die Test-Lichtart zunächst einer Transformation (chromatic adaption transform) unterworfen werden. Die daraus berechneten neuen Farbkoordinaten (corresponding color) können dann wiederum in obige Formel eingesetzt werden. Details dazu sind z.B. im Anhang F des genannten Buchs Billmeyer and Saltzman: "Principles of color technology", 3. edition, John Wiley & Sons, Inc. beschrieben.

In der Zeichnung sind die einzelnen Schritte des erfindungsgemässen Verfahrens in Forms eines Prinzipschemas nochmals übersichtlich zusammengefasst:

Eichfärbungen 101...112 der am zugrundeliegenden Druckprozess beteiligten Basisfarben sowie das zugrundeliegende Substrat 120 werden spektralfotometrisch ausgemessen, und aus den spektralen Messwerten werden in einer Auswertungsstufe 150 die optischen Daten (Streuungsspektren und Absorptionsspektren) der Basisfarben ermittelt. Diese werden einer Rezeptierstufe 200 als Parameter des zugrundeliegenden Druckprozesses zugeführt.

Anderseits werden der Rezeptierstufe 200 als Eingangsgrössen die Farbkoordinaten (L,a,b-Werte) 210 der Gitterpunkte des Farbraums zugeführt. Die Rezeptierstufe 200 berechnet alle möglichen Farbrezepturen für den jeweiligen Gitterpunkt und wählt mittels einer in ihr enthaltenen Auswahlstufe 220 aus diesen Farbrezepturen diejenige aus, die die höchste Farbkonstanz aufweist. Das zu dieser ausgewählten Rezeptur 230 gehörende Spektrum sowie die Konzentrationen bzw. Flächenbedeckungen der beteiligten Basisfarben werden jeweils zusammen mit den Farbkoordinaten 210 in Zuordnung zu den letzteren in einer Tabelle 300 abgelegt, welche die erfindungsgemäss erzeugte Farbpalette darstellt.

Die Auswertungsstufe 150 und die Rezeptierstufe 200 mit der Auswahlstufe 220 sind selbstverständlich als Software realisiert. Die Farbpalette 300 ist ebenfalls elektronisch gespeichert.

Das erfindungsgemässe Verfahren ermöglicht die Erzeugung einer Farbpalette, welche eine mathematisch/physikalische Grundlage (CIE-System) besitzt. Dies erlaubt, auf einfache Weise einen visuell gleichabständigen Farbraum zu definieren und einzelnen Punkten in diesem Raum eine spektrale Kurve, welche die beste Farbkonstanz aufweist, zuzuordnen.

Anhand verhältnismässig weniger Andrucke (Eichfärbungen) für die Basisfarben und der Festlegung eines Substrates, auf welches gedruckt werden soll, wird eine komplette Farbpalette (Farbsystem) erzeugt. Der Farbraum kann mit dem erfindungsgemässen Verfahren mit beliebig vielen Punkten durchsetzt werden, was für herkömmliche Farbfächer oder Farbbücher wegen des grossen Produktionsaufwandes nicht praktikabel wäre. Des weiteren können auf einfache Weise zusätzliche Optimierungskriterien (wie z.B. Farbkonstanz, etc.) beim erfindungsgemässen Aufbau des Farbpaletten-Systems integriert werden.

Da jedem Farbort ein Spektrum zugeordnet ist, wird präzise Farbkommunikation möglich.

**Patentansprüche**

1.    Verfahren zur Erzeugung einer eine Vielzahl von Farbmustern umfassenden Farbpalette für einen vorgegebenen, mit einer Anzahl von definierten Basisfarben arbeitenden Farbgebungsprozess und für ein vorgegebenes Substrat, **dadurch gekennzeichnet, dass** die einzelnen Farbmuster in einem mathematisch definierten Farbraum anhand von den Farbraum beschreibenden Farbkoordinaten systematisch, insbesondere äquidistant festgelegt werden, dass für jedes Farbmuster im Farbraum mittels eines den vorgegebenen Farbgebungsprozess und das vorgegebene Substrat repräsentierenden Farbmischmodells das Spektrum des Farbmusters rechnerisch synthetisiert wird, und dass die rechnerisch synthetisierten Spektren in Zuordnung zu den Farbkoordinaten der zugrundeliegenden Farbmuster abgespeichert werden.

2. Verfahren nach Anspruch 1, **dadurch gekennzeichnet, dass** zusätzlich zu den rechnerisch synthetisierten Spektren auch die zugehörigen Farbmischrezepturen in Zuordnung zu den zugrundeliegenden Farbmustern abgespeichert werden.

3. Verfahren nach einem der vorangehenden Ansprüche, **dadurch gekennzeichnet, dass** für den Fall, dass die rechnerische Synthetisierung für ein Farbmuster zwei oder mehrere Spektren ergibt, dasjenige Spektrum ausgewählt und abgespeichert wird, welches die grösste Farbkonstanz aufweist.

4. Verfahren nach einem der vorangehenden Ansprüche, **dadurch gekennzeichnet, dass** bei der rechnerischen Synthetisierung der Spektren mehr als drei Basisfarben in das Farbmischmodell einbezogen werden und dass der dabei erreichte zusätzliche Freiheitsgrad zur Optimierung der Farbkonstanz der synthetisierten Spektren ausgenützt wird.

5. Verfahren nach einem der vorangehenden Ansprüche, **dadurch gekennzeichnet, dass** als Farbraum der CIE-L,a,b - Farbraum mit karthesischen Farbkoordinaten oder der CIE-L,c,h - Farbraum mit Polarfarbkoordinaten oder ein äquivalenter Farbraum benutzt wird.

6. Verfahren nach einem der vorangehenden Ansprüche, **dadurch gekennzeichnet, dass** zur Synthetisierung der Spektren ein Farbmischmodell auf der Grundlage eines Farbrezepturalgorithmus', insbesondere nach Kubelka-Munk, Hoffmann-Schmelzer oder Mudgett-Richards, oder eines Rasterrezepturalgorithmus', insbesondere nach Emmel-Hersch verwendet wird.

## Claims

1. A method for producing a colour palette comprising a plurality of colour samples for a predetermined colouring process that works with a number of defined base colours and for a predetermined substrate, **characterised in that** the individual colour samples are defined systematically, in particular equally spaced, in a mathematically defined colour space by means of colour coordinates describing the colour space,
   **in that** for each colour sample in the colour space the spectrum of the colour sample is synthesised by computer by means of a colour mixing model representing the predetermined colouring process and the predetermined substrate,
   and **in that** the computer-synthesised spectra are stored in association with the colour coordinates of the underlying colour sample.

2. A method according to Claim 1,
   **characterised in that** additionally to the computer-synthesised spectra, the associated colour mixing recipes are also stored in association with the underlying colour samples.

3. A method according to one of the preceding Claims, **characterised in that** in the event that the computer synthesising for a colour sample produces two or more spectra, the spectrum that exhibits the greatest colour constancy is selected and stored.

4. A method according to one of the preceding Claims, **characterised in that** for the computer synthesising of the spectra, more than three base colours are included in the colour mixing model
   and **in that** the additional degree of freedom achieved thereby is utilised to optimise the colour constancy of the synthesised spectra.

5. A method according to one of the preceding Claims, **characterised in that** the CIE L,a,b colour space having Cartesian colour coordinates or the CIE L,c, h colour space having polar colour coordinates or an equivalent colour space is used as the colour space.

6. A method according to one of the preceding Claims, **characterised in that** for synthesising the spectra a colour mixing model is used on the basis of a colour recipe algorithm, in particular according to Kubelka-Munk, Hoffman-Schmelzer or Mudgett-Richards, or a halftone recipe algorithm, in particular according to Emmel-Hersch.

## Revendications

1. Procédé pour produire une palette de couleurs comprenant une pluralité d'échantillons de couleur pour un processus de mise en couleur prédéfiini, fonctionnant avec un nombre de couleurs de base définies, et pour un substrat prédéfini, **caractérisé en ce que** les différents échantillons de couleur sont fixés de manière systématique, en particulier de manière équidistante, dans un espace de couleur défini de manière mathématique, à l'aide des coordonnées de couleur décrivant l'espace de couleur, **en ce que** pour chaque échantillon de couleur dans l'espace de couleur, le spectre de l'échantillon de couleur est synthétisé par le calcul au moyen d'un modèle de mélange de couleurs représentant le processus de mise en couleur prédéfini et le substrat prédéfini, et **en ce que** les spectres synthétisés par le calcul sont mémorisés en correspondance avec les coordonnées de couleur des échantillons de couleur pris pour base.

2. Procédé selon la revendication 1, **caractérisé en ce qu'**outre les spectres synthétisés par le calcul on mémorise aussi les recettes de mélange de couleurs correspondantes en correspondance avec les échantillons de couleur pris pour base.

3. Procédé selon l'une des revendications précédentes, **caractérisé en ce que** pour le cas dans lequel la synthétisation par le calcul donne pour un échantillon de couleur deux spectres ou plus, on choisit et mémorise le spectre qui présente la plus grande constance de couleur.

4. Procédé selon l'une des revendications précédentes, **caractérisé en ce que** lors de la synthétisation par le calcul des spectres, on inclut plus de trois couleurs de base dans le modèle de mélange de couleurs et **en ce que** le degré de liberté supplémentaire obtenu ici est utilisé pour optimiser la constance de couleur des spectres synthétisés.

5. Procédé selon l'une des revendications précédentes, **caractérisé en ce qu'**on utilise comme espace de couleur l'espace de couleur CIE-L,a,b avec coordonnées de couleur cartésiennes ou l'espace de couleur CIE-L,c,h avec coordonnées de couleur polarisée ou un espace de couleur équivalent,

6. Procédé selon l'une des revendications précédentes, **caractérisé en ce que** pour la synthétisation des spectres, on utilise un modèle de mélange de couleurs sur la base d'un algorithme de recette de couleur, en particulier selon Kubelka-Munk, Hoffmann-Schmelzer ou Mudgett-Richards, ou un algorithme de recette de trame, en particulier selon Emmel-Hersch.